# EUROPÄISCHE PATENTSCHRIFT

(11) **EP 0 930 424 B1**
(45) Veröffentlichungstag und Bekanntmachung des Hinweises auf die Patenterteilung: **17.03.2004**
(21) Anmeldenummer: 98123078.2
(22) Anmeldetag: 10.12.1998
(51) Int. Cl.: F02D 11/10, F02D 41/06, B60K 41/04

(54) **Verfahren und Vorrichtung zur Verbesserung des Anfahrverhaltens eines Kraftfahrzeuges mit Handschaltgetriebe**
Method and apparatus for improving startoff in a vehicle equipped with a manual gearbox
Méthode et dispositif pour améliorer le démarrage d'un véhicule à boîte de vitesse manuelle

(30) Priorität: 15.01.1998 DE 19801206
(43) Veröffentlichungstag der Anmeldung: 21.07.1999
(73) Patentinhaber: Volkswagen Aktiengesellschaft, 38436 Wolfsburg (DE)
(72) Erfinder: Hinrichsen, Uwe, Dr., 38124 Braunschweig (DE); Bothe, Edgar, Dipl.-Ing., 31224 Peine (DE); Merk, Peter, Dipl.-Ing., 38446 Wolfsburg (DE)

(56) Entgegenhaltungen:
- EP-A- 0 428 048
- DE-A- 4 120 602
- DE-A- 4 140 328
- GB-A- 2 312 970
- US-A- 4 651 694

## Beschreibung

Die Erfindung betrifft ein Verfahren und eine Vorrichtung zur Verbesserung des Anfahrverhaltens eines Kraftfahrzeuges mit Handschaltgetriebe.

Aufgrund der strengen Abgas- und Verbrauchsvorschriften wird bei modernen Kraftfahrezug-Brennkraftmaschinen die Leerlaufdrehzahl möglichst niedrig eingestellt. Durch die niedrige Leerlaufdrehzahl kommt es bei Kraftfahrzeugen mit Handschaltgetriebe häufig zu Schwierigkeiten beim Anfahren, da die bisher bekannten Leerlaufregelsysteme so ausgebildet sind, daß sie erst mit einer Drehzahlanhebung und damit einer Anhebung der Vorsteuerwerte für den Leerlaufsteller sowie für die Zündeinrichtung der Brennkraftmaschine reagieren, wenn bereits eine erhebliche Drehzahlabsenkung von der vorgegebenen Leerlauf-Solldrehzahl erkannt wurde. Häufig reagieren die bekannten Leerlaufregelsysteme nicht schnell genug, so daß die Brennkraftmaschine beim Anfahren des Kraftfahrzeuges sehr leicht "abgewürgt" wird.

Aus der DE 41 40 328 ist eine Einrichtung zur Verbesserung des Anfahrverhaltens eines mit einem Handschaltgetriebe ausgerüsteten Kraftfahrzeuges bekannt, dessen Brennkraftmaschine von einer elektronischen Brennkraftmaschinensteuerung gesteuert wird, die als Eingangssignale zumindest das Signal eines Brennkraftmaschinen-Leerlaufschalters sowie das Signal eine Kraftfahrzeuggeschwindigkeitsgebers erhält. An der Kupplung bzw. am Kupplungspedal des Kraftfahrzeuges ist ein Kupplungsstellungsgeber vorgesehen, der so eingestellt ist, daß er beim Einkuppeln der Kraftfahrzeugkupplung unmittelbar vor dem Kraftschluß der Kraftfahrzeugkupplung ein Kupplungseingriffssignal an die Brennkraftmaschinensteuerung abgibt und daß die Brennkraftmaschinensteuerung bei Eintreffen des Kupplungseingriffssignals den Leerlaufdrehzahl-Sollwert und damit die an den Leerlaufsteller sowie an die Zündeinrichtung der Brennkraftmaschine abzugebenden Vorsteuerwerte um einen jeweils vorgebbaren Betrag anhebt.
Dadurch wird erreicht, daß bereits vor der Belastung der Brennkraftmaschine des Kraftfahrzeuges mit dem Anfahrdrehmoment die Leerlaufdrehzahl der Brennkraftmaschine und damit die Vorsteuerwerte für den Leerlaufsteller sowie für die Zündeinrichtung der Brennkraftmaschine so angehoben werden, daß ein nachfolgendes Einkuppeln und damit eine nachfolgende Belastung der Brennkraftmaschine mit dem Anfahrdrehmoment zu keinem nennenswerten Drehzahleinbruch führt. Damit ist ein sicheres Anfahren des Kraftfahrzeuges auch dann gewährleistet, wenn der Fahrer des Kraftfahrezuges beim Anfahren relativ hart einkuppelt. Nachteilig an der bekannten Einrichtung ist, daß die Erhöhung der Leerlaufdrehzahl wie eine Betätigung des Gaspedals wirkt, so daß dadurch das Kraftfahrzeug sich ohne Betätigung des Gaspedals in Bewegung setzen könnte, was aus sicherheitstechnischen Gründen bedenklich ist.

Aus der DE 38 15 734 ist eine Lastverstelleinrichtung bekannt, mit einem auf ein die Leistung einer Brennkraftmaschine bestimmenden Stellglied einwirkbaren Steuerelement, das mit einem mit einem Fahrpedal gekoppelten Mitnehmer verbunden ist und zusätzlich mittels eines elektrischen Stellantriebes bewegbar ist, mit einem dem Mitnehmer zugeordneten Sollwerterfassungselement, einem mit diesem zusammenwirkenden und auf den elektrischen Stellantrieb einwirkenden Istwerterfassungselement, wobei der elektrische Stellantrieb in Abhängigkeit von den erfaßten Werten von einer elektronischen Regeleinrichtung ansteuerbar ist.
Lastverstelleinrichtungen dieser Art werden in Kraftfahrzeugen zur Betätigung der Drosselklappe oder der Einspritzpumpe durch das Fahrpedal vorgesehen, um mittels der elektronischen Regeleinrichtung derart eingreifen zu können, daß beispielsweise Radschlupf beim Anfahren infolge zu hoher Leistung vermieden wird. Die Regeleinrichtung kann bei zu raschem Niedertreten des Pedals dafür sorgen, daß beispielsweise die Drosselklappe weniger geöffnet wird, als der Pedalstellung entspricht, so daß die Brennkraftmaschine nur eine zu keinem Durchdrehen der Räder führende Leistung erzeugt.

Der Erfindung liegt daher das technische Problem zugrunde, ein Verfahren und eine Vorrichtung zur Verbesserung des Anfahrverhaltens eines Kraftfahrzeuges mit Handschaltgetriebe zu schaffen, mittels derer der Kraftfahrzeugführer in weiten Bereichen derart unterstützt wird, daß die Gefahr eines Abwürgens des Motors und ein Durchdrehen der Räder bzw. ein Verschleiß der Kupplung verringert wird, ohne daß es zu sicherheitsrelevanten Fahrzeugzuständen kommen kann.

Die Lösung des technischen Problems ergibt sich durch die Merkmale der Patentansprüche 1 und 4. Dabei wird das Fahrpedal als mechanisch entkoppeltes, elektrisches Fahrpedal ausgebildet, dessen Ist-Werte an ein zugeordnetes Steuergerät übergeben werden. Des weiteren wird dem Steuergerät von der Einrichtung zur Erfassung des Beginns und des Endes eines Anfahrvorganges ein den Zustand beschreibendes Signal und vom Motor ein die aktuelle Ist-Motordrehzahl ausdrückendes Signal zugeführt. In dem Steuergerät sind Kennlinien oder Kennfelder abgelegt, in denen funktional der Zusammenhang zwischen dem Fahrpedalwert und der Soll-Motordrehzahl erfaßt wird. Durch Differenzbildung von Ist- und Soll-Motordrehzahl wird eine Fehlergröße ermittelt und durch einen im Steuergerät oder extern angeordneten Regler ein Stellsignal für ein die Motordrehzahl bzw. Motormoment beeinflussendes Stellglied gebildet, so daß die Ist-Motordrehzahl in Richtung der Soll-Motorendrehzahl nachgeführt wird. Dadurch wird erreicht, daß einerseits bei einem zu schnellen Einkuppeln durch Erhöhung der Motordrehzahl einem Abwürgen des Motors und andererseits bei zu viel Gas dem Kupplungsverschleiß entgegengewirkt wird. Da der Fahrpedalwert als Eingangsgröße für die Regelung wirkt, ist eine Losfahren des Kraftfahrezuges ohne Betätigung des Fahrpedals vermeidbar. Weitere vorteilhafte Ausgestaltungen der Erfindung ergeben sich aus den Unteransprüchen.

In einer bevorzugten Ausführungsform sind dem Stellsignal in Abhängigkeit von der Fahrpedalstellung obere und untere Grenzwerte zugeordnet, so daß die Regelung nicht beliebig stark versucht, die Fehlergröße auszuregeln. Damit verhält sich das Kraftfahrzeug trotz der Anfahrhilfe in den Extremsituationen wie ein Kraftfahrzeug ohne Anfahrhilfe, was psychologisch die Akzeptanz durch den Kraftfahrzeugführer erhöht, da die Anfahrhilfe ihm nicht vollständig ein Kraftfahrzeugverhalten aufoktruiert. Des weiteren wird dadurch erreicht, daß nicht ungewollte Fahrzeugzustände auftreten. So könnte beispielsweise der Kraftfahrzeugführer beim Rangieren in eine Parklücke von Kupplungspedal abrutschen, was bei einem Kraftfahrzeug ohne Anfahrhilfe zum Abwürgen des Motors führen würde. Würde nun die Anfahrhilfe unbegrenzt versuchen, diesem zu schnellen "Einkuppeln" entgegenzuwirken, so könnte es passieren, daß das Kraftfahrzeug unabsichtlich auf ein parkendes Kraftfahrzeug auffahren würde. Durch die Begrenzung des Stellsignals wird ein solches unabsichtliches Auffahren unterbunden.

In einer weiteren bevorzugten Ausführungsform wird der Regelmechanismus bei Überschreitung der Soll-Motordrehzahl nur bis zu einem bestimmten Fahrpedalwert vorgenommen, um dem Kraftfahrzeugführer auch weiterhin ein sportliches Anfahren zu ermöglichen.

Vorzugsweise werden das Steuergerät des Fahrpedals und die Einrichtung zur Erfassung des Beginnes und des Endes eines Anfahrvorganges in einem zentralen Motorsteuergerät integriert. Insbesondere die Einrichtung zur Erfassung des Anfahrvorganges läßt sich durch entsprechende Programmierung herkömmlicher Motorsteuergeräte realisieren, da alle benötigten Eingangssignale auch dem Motorsteuergerät zugeführt werden müssen.

Die Erfindung wird nachfolgend anhand eines bevorzugten Ausführungsbeispiels näher erläutert. Die Figuren zeigen:
- Fi. 1: ein schematisches Blockschaltbild einer Vorrichtung zur Verbesserung des Anfahrverhaltens und

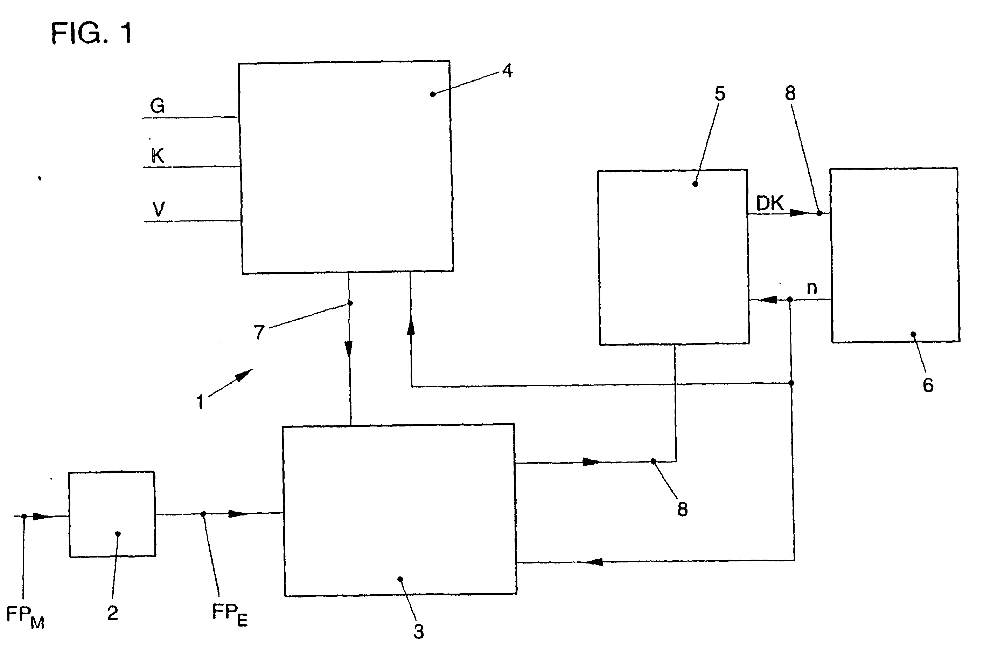

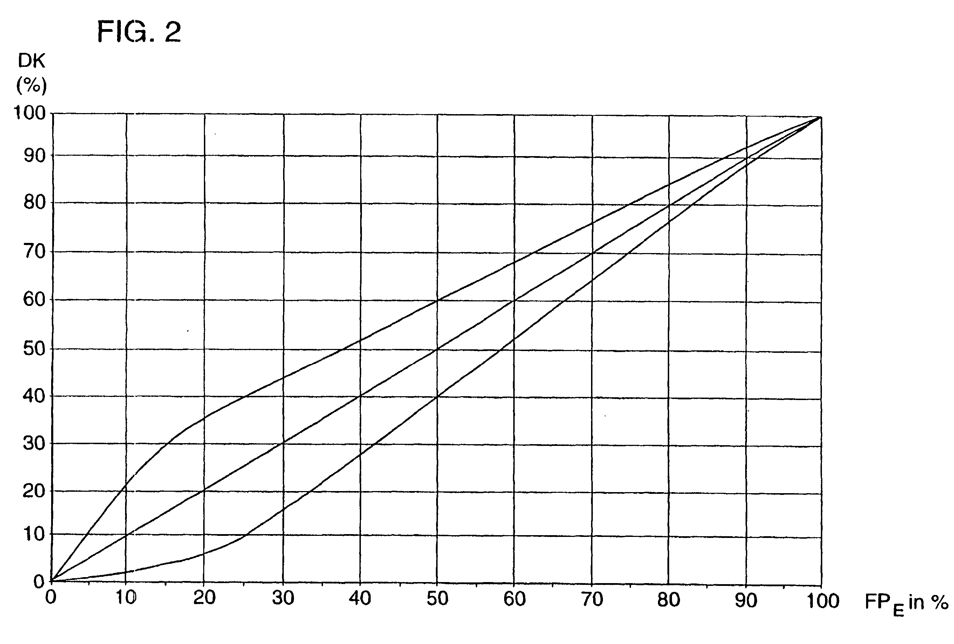

- Fig. 2: ein Kennlinienverlauf der Drosselklappenstellung über den Fahrpedalwert in %.

Die Vorrichtung 1 zur Verbesserung des Anfahrverhaltens umfaßt ein mechanisch entkoppeltes, elektrisches Fahrpedal 2 mit zugeordnetem Steuergerät 3 , eine Einrichtung 4 zur Erfassung des Beginns und des Endes eines Anfahrvorganges und ein Motorsteuergerät 5, das elektrisch mindestens ein die Motordrehzahl beeinflussendes Stellglied eines Motors 6 ansteuert. Die Einrichtung 4 zur Erfassung des Anfahrvorganges erhält beispielsweise als Eingangssignale ein Gangsignal G, ein Kupplungsbetätigungssignal K und die Geschwindigkeit V des Kraftfahrezuges. Des weiteren wird der Einrichtung 4 die Motordrehzahl n zugeführt. Aus den Informationen, daß ein Gang eingelegt ist, die Kupplung betätigt wird und die Geschwindigkeit V kleiner als eine Grenzgeschwindigkeit V_{g} ist, kann auf einen Anfahrvorgang zurückgeschlossen werden. Prinzipiell sind jedoch eine Vielzahl verschiedener Verfahren oder Vorrichtungen anwendbar, mittels derer ein Anfahrvorgang detektierbar ist. Entsprechend dem Beginn des Anfahrvorganges kann auch auf das Ende des Anfahrvorganges zurückgeschlossen werden, beispielsweise keine Betätigung des Kupplungspedals mehr und V > V_{g.} Weiterhin kann aus der Übersetzung des eingelegten Gangs und der Fahrzeuggeschwindigkeit die Motordrehzahl n2 berechnet werden, die sich am Anfahrende, also bei geschlossener Kupplung, einstellen würde. Auf das Ende des Anfahrvorgangs kann geschlossen werden, wenn die Ist-Motordrehzahl n für eine bestimmte Zeit innerhalb vorgegebener, enger Grenzen um die berechnete Drehzahl n2 liegt. Falls der eingelegte Gang nicht sensiert wird, kann diese Berechnung für jeden als Anfahrgang in Frage kommenden Gang ausgeführt werden. Auf das Anfahrende kann dann geschlossen werden, wenn die zuvor beschriebene Bedingung für einen der Gänge zutrifft. Ein den Anfahrtsvorgang beschreibendes Signal 7 wird von der Einrichtung 4 an das Steuergerät 3 übergeben. Des weiteren erhält das Steuergerät 3 als Eingangsgrößen die Motordrehzahl n und einen elektrischen Fahrpedalwert FP_{E} , der durch Umwandlung des mechanischen Fahrpedalwertes FP_{M} aufgrund einer Fußbetätigung des Fahrpedals in ein proportionales elektrisches Signal erzeugt wird. In dem Steuergerät 3 sind Kennlinien oder Kennfelder Fahrpedalwert-Soll-Motordrehzahl abgelegt. Erfaßt nun das Steuergerät 3 einen Fahrpedalwert FP_{E,} so wird aus der Kennlinie eine Soll-Motordrehzahl entnommen. Anschaulich entspricht die Soll-Motordrehzahl der Motordrehzahl, die bei einem optimalen Anfahrvorgang anstehen müßte. Durch Vergleich der erfaßten Ist-Motordrehzahl n mit der ausgelesenen Soll-Motordrehzahl erkennt das Steuergerät, ob der Kraftfahrzeugführer zu viel oder zu wenig Gas gibt im Verhältnis zur aktuellen Kupplungsstellung. Ist beispielsweise die Ist-Motordrehzahl n größer als die Soll-Motordrehzahl, so gibt der Kraftfahrzeugführer zu viel Gas. Mittels eines Reglers mit P-, PD- oder PID-Verhalten wird dann eine Stellgröße bzw. Stellsignal 8 erzeugt und an das Motorsteuergerät 5 übergeben. Prinzipiell könnte das Stellsignal 8 auch direkt an das Stellglied übergeben werden, da jedoch eine Verbindung vom Motorsteuergerät 5 zu dem Stellglied bereits vorhanden ist, führt der Weg über das Motorsteuergerät 5 zu einer Leitungseinsparung. Dabei kann es dazukommen, daß das Ausgangssignal des Reglers und das Ausgangssignal des Motorsteuergerätes 5 aus signaltechnischen Gründen voneinander abweichen. Der Einfachheit halber soll jedoch nachfolgend davon ausgegangen werden, daß das Stellsignal 8 durch das Motorsteuergerät 5 geschleust wird, so daß die Signale identisch sind. Das Stellsignal 8 steuert mindestens ein die Motordrehzahl beeinflussendes Stellglied an, wie beispielsweise die Drosselklappenstellung oder die Zündung bei Otto-Motoren oder das Einspritzventil bei einem Diesel-Motor. Genau genommen beeinflußt die Drosselklappenstellung nicht die Motordrehzahl n, sondern das Motormoment, dieses hat aber unmittelbare Auswirkung auf die Motordrehzahl n. Im vorausgehenden Beispiel führt das Stellsignal 8 zu einer wenig stark geöffneten Drosselklappenstellung, so daß die Motordrehzahl n in Richtung der Soll-Motordrehzahl verändert wird. Neben einer Kraftstoffeinsparung wird auch die in der Kupplung umgesetzte Wärmeenergie dadurch reduziert, was die Lebensdauer der Kupplung erhöht. Nach Erfassung des Endes des Anfahrvorganges wird die Regelung abgeschaltet und mittels geeigneter Übergangsfunktionen sichergestellt, daß das eingestellte Motordrehmoment mit dem erfaßten Fahrpedalwert FP_{E} korrespondiert, ohne beim Abschalten des Reglers einen unkomfortablen Ruck zu erzeugen. Weiterhin kann zur Sicherheit der Vorrichtung 1 ein Zeitschalter zugeordnet werden, so daß nach Erfassung des Beginns eines Anfahrvorganges oder nach Überschreitung einer vorgegebenen Fahrzeuggeschwindigkeit nach einer bestimmten Zeit automatisch die Regelung abgeschaltet wird.

In Fig. 2 sind Kennlinienverläufe des Fahrpedalwertes FP_{E} und der Drosselklappenstellung DK in % dargestellt. Die mittlere Kennlinie zeigt den Verlauf bei nicht aktiver Regelung, wo zwischen Fahrpedalwert FP_{E} und Drosselklappenstellung DK ein linearer Zusammenhang besteht. Die obere und untere Kennlinie stellen die Begrenzung der Regelung dar. Durch das Zusammenfallen der oberen und unteren Kennlinie bei 0 bzw. 100% ist sichergestellt, daß der Fahrer unabhängig von der Regelung ohne Betätigung des Fahrpedals kein und bei maximaler Betätigung des Fahrpedals das volle Motormoment erzeugt. Läßt beispielsweise der Kraftfahrzeugführer die Kupplung nicht kommen, betätigt aber das Fahrpedal, so folgt die Drosselklappenstellung DK der unteren Kennlinie. Die obere Kennlinie hingegen stellt dar, wieweit maximal die Regelung einem zu schnellen Einkuppeln entgegenregeln kann. Rutscht nun beispielsweise der Kraftfahrzeugführer bei einem Fahrpedalwert FP_{E} von 20% von der Kupplung ab, so kann die Regelung maximal die Drosselklappenstellung auf 35% erhöhen. Diese Motormomenterhöhung reicht jedoch nicht aus, um den Einbruch der Motordrehzahl durch das zu schnelle Einkuppeln zu kompensieren, und der Motor wird abgewürgt.

Verfahren und Vorrichtung sind prinzipiell auch verwendbar, falls zusätzlich das Kupplungspedal ebenfalls als mechanisch entkoppeltes, elektrisches Kupplungspedal ausgebildet ist. In diesem Fall kann jedoch einerseits die Einrichtung 4 zur Erfassung des Anfahrvorganges einfacher ausgebildet werden, andererseits ist auch eine modifizierte elektronische Ansteuerung der Kupplung in den Regelmechanismus integrierbar.

## Patentansprüche

1. Verfahren zur Verbesserung des Anfahrverhaltens eines Kraftfahrzeuges mit Handschaltgetriebe, mittels mindestens einer Einrichtung (4) zur Erfassung des Beginns und des Endes eines Anfahrvorganges und eines mechanisch entkoppelten, elektronischen Fahrpedals (2) mit zugeordnetem Steuergerät (3), das mit mindestens einer die Motordrehzahl n beeinflußenden Stelleinrichtung verbunden ist, umfassend folgende Verfahrensschritte:
a) Erfassung und Übergabe eines Anfahrvorganges durch die Einrichtung (4) an das Steuergerät (3),
b) Erfassung des Fahrpedalwertes FP_{E} und der Ist-Motordrehzahl n durch das Steuergerät (3),
c) Vergleich der Ist-Motordrehzahl n mit einer dem erfaßten Fahrpedalwert FP_{E} zugeordneten Soll-Motordrehzahl und
d) Erzeugung eines Stellsignals (8) durch das Motorsteuergerät (5) für die Stelleinrichtung zur Nachführung der Ist-Motordrehzahl n in den Bereich der Soll-Motordrehzahl bis das Ende des Anfahrvorganges von der Einrichtung (4) erfaßt wird.

2. Verfahren nach Anspruch 1, **dadurch gekennzeichnet, daß** dem Stellsignal (8) ein oberer und ein unterer Grenzwert zugeordnet sind, wobei die Grenzwerte vom Fahrpedalwert und/oder der Motordrehzahl abhängig sein können.

3. Verfahren nach einem der vorangegangenen Ansprüche, **dadurch gekennzeichnet, daß** bei einer Über- und/oder Unterschreitung der Soll-Motordrehzahl die Nachführung der Ist-Motordrehzahl nur innerhalb eines vorgebbaren Bereiches des Fahrpedalwertes erfolgt.

4. Verfahren nach einem der vorangegangenen Ansprüche, **dadurch gekennzeichnet, daß** das Stellsignal (8) bei Erfassung des Beginns und/oder des Endes eines Anfahrvorganges nach einer vorgegebbaren Übergangsfunktion verläuft.

5. Verfahren nach einem der vorangegangenen Ansprüche, **dadurch gekennzeichnet, daß** zur Erfassung des Endes eines Anfahrvorganges die Einrichtung (4) eine Motordrehzahl n2 für den eingelegten Gang berechnet, die sich bei geschlossener Kupplung einstellen müßte, diese mit der Ist-Motordrehzahl vergleicht und auf das Ende des Anfahrvorganges schließt, falls die Ist-Motordrehzahl für eine vorgebbare Zeit innerhalb eines vorgebbaren Intervalls um die Motordrehzahl n2 liegt.

6. Verfahren nach einem der Ansprüche 1 bis 4, **dadurch gekennzeichnet, daß** zur Erfassung des Endes des Anfahrvorganges die Einrichtung (4) für die als Anfahrgänge in Frage kommenden Gänge jeweils eine Motordrehzahl n2 berechnet, die sich jeweils bei geschlossener Kupplung einstellen würde, diese mit der Ist-Motordrehzahl n vergleicht und auf das Ende eines Anfahrvorganges schließt, falls die Ist-Motordrehzahl n für eine vorgebbare Zeit innerhalb eines Intervalles um die Motordrehzahl n2 für genau einen dieser Gänge liegt.

7. Verfahren nach einem der vorangegangenen Ansprüche, **dadurch gekennzeichnet, daß** nach Erfassung des Beginns eines Anfahrvorganges und/oder nach Überschreiten einer Grenzgeschwindigkeit V_{g} eine vorgebbare Zeit vergangen ist.

8. Vorrichtung zur Verbesserung des Anfahrverhaltens eines Kraftfahrzeuges mit Handschaltgetriebe, umfassend ein Fahrpedal, eine Einrichtung (4) zur Erfassung des Beginns und des Endes eines Anfahrvorganges eines Kraftfahrzeuges und ein Steuergerät (5) mit einem zugeordneten Regler,
mittels dessen mindestens eine die Motordrehzahl n beeinflußende Stelleinrichtung ansteuerbar ist,
**dadurch gekennzeichnet, daß**
das Fahrpedal als mechanisch entkoppeltes, elektronisches Fahrpedal (2) mit zugeordnetem Steuergerät (3) ausgebildet ist, wobei dem Steuergerät (3) der Fahrpedalwert FP_{E}, eine Ist-Motordrehzahl n und ein Steuersignal der Einrichtung (4) zuführbar sind und durch das Steuergerät (3) mittels einer Kennlinie oder Kennfeldes Fahrpedalwert-Soll-Motordrehzahl durch den Regler ein Stellsignal (8) für die Stelleinrichtung erzeugt wird, bis das Ende des Anfahrvorganges von der Einrichtung (4) erfaßt wird.

9. Vorrichtung nach Anspruch 8, **dadurch gekennzeichnet, daß** das Steuergerät (3) des elektronischen Fahrpedals (2) in einem Motorsteuergerät (5) integriert ist.

10. Vorrichtung nach Anspruch 8 oder 9, **dadurch gekennzeichnet, daß** der Regler als P-, PD- oder PID-Regler ausgebildet ist.

11. Vorrichtung nach Anspruch 9, **dadurch gekennzeichnet, daß** die Einrichtung (4) zur Erfassung des Beginns und des Endes eines Anfahrvorganges im Motorsteuergerät (5) durch software-mäßige Verknüpfung vorhandener Signale integriert ist.

12. Vorrichtung nach einem der Ansprüche 8 bis 11, **dadurch gekennzeichnet, daß** die Kennlinie oder Kennfelder für den unteren und oberen Grenzwert in einem gemeinsamen Punkt beginnen und enden.

## Claims

1. Method for improving the driving off behaviour of a motor vehicle having a manual gearbox, by means of at least one device (4) for sensing the start and the end of a driving off process and a mechanically decoupled, electronic accelerator pedal (2) with an assigned controller (3) which is connected to at least one actuation device which influences the engine speed n, comprising the following method steps:
a) sensing and transmission of a driving off process by the device (4) to the controller (3),
b) sensing of the accelerator pedal value FP_{E} and of the actual engine speed n by the controller (3),
c) comparison of the actual engine speed n with a setpoint engine speed which is assigned to the sensed accelerator pedal value FP_{E}, and
d) generation of an actuation signal (8) by the engine controller (5) for the actuation device in order to adjust the actual engine speed n to the region of the setpoint engine speed until the end of the driving off process is sensed by the device (4).

2. Method according to Claim 1, **characterized in that** an upper limiting value and a lower limiting value are assigned to the actuation signal (8), it being possible for the limiting values to be dependent on the accelerator pedal value and/or the engine speed.

3. Method according to one of the preceding claims, **characterized in that**, when the engine speed exceeds and/or drops below the setpoint engine speed, the adjustment of the actual engine speed is carried out only within a predefinable region of the accelerator pedal value.

4. Method according to one of the preceding claims, **characterized in that** the actuation signal (8) has a profile according to a predefinable transition function when the start and/or the end of a driving off process is sensed.

5. Method according to one of the preceding claims, **characterized in that**, in order to sense the end of a driving off process, the device (4) calculates, for the selected gear speed, an engine speed n2 which would have to be set with the clutch closed, compares said engine speed n2 with the actual engine speed and concludes that the driving off process is at an end if the actual engine speed is within a predefinable interval around the engine speed n2 for a predefinable time.

6. Method according to one of Claims 1 to 4, **characterized in that**, in order to sense the end of the driving off process, the device (4) calculates, for each of the gear speeds which are possible as driving off gear speeds, an engine speed n2 which would be set in each case with the clutch closed, compares said engine speed n2 with the actual engine speed n and concludes that a driving off process is at an end if the actual engine speed n is within an interval around the engine speed n2 for precisely one of these gear speeds for a predefinable time.

7. Method according to one of the preceding claims, **characterized in that** a predefinable time has passed after the sensing of the start of a driving off process and/or after a limiting speed V_{g} has been exceeded.

8. Device for improving the driving off behaviour of a motor vehicle having a manual gearbox, comprising an accelerator pedal, a device (4) for sensing the start and the end of a driving off process for a motor vehicle, and a controller (5) with an assigned regulator, by means of which at least one actuation device which influences the engine speed n can be actuated, **characterized in that** the accelerator pedal is embodied as a mechanically decoupled electronic actuator pedal (2) with an assigned controller (3), it being possible to feed the accelerator pedal value FP_{E} to the controller (3), and to feed an actual engine speed n and a control signal to the device (4), and an actuation signal (8) for the actuation device is generated by the controller (3) by means of a characteristic curve or characteristic diagram of the accelerator pedal value plotted against the setpoint engine speed by means of the regulator, until the end of the driving off process is sensed by the device (4).

9. Device according to Claim 8, **characterized in that** the controller (3) of the electronic accelerator pedal (2) is integrated into an engine controller (5).

10. Device according to Claim 8 or 9, **characterized in that** the regulator is embodied as a P, PD or PID controller.

11. Device according to Claim 9, **characterized in that** the device (4) for sensing the start and the end of a driving off process is integrated into the engine controller (5) by connecting signals which are present by software means.

12. Device according to one of Claims 8 to 11, **characterized in that** the characteristic curve or characteristic diagrams for the lower and upper limiting values begin and end at a common point.

## Revendications

1. Procédé pour l'amélioration du démarrage d'un véhicule automobile avec boîte de vitesse manuelle, moyennant au moins un dispositif (4) pour la saisie du début et de la fin d'un processus de démarrage, et une pédale d'accélérateur électronique mécaniquement découplée (2) avec un appareil de commande (3) associé, lequel est relié à au moins un dispositif de réglage influençant le régime du moteur n, avec les étapes suivantes du procédé :
a) saisie et retransmission à l'appareil de commande (3) d'un processus de démarrage via le dispositif (4),
b) saisie de la valeur de la pédale de l'accélérateur FP_{E} et du régime réel du moteur n avec l'appareil de commande (3),
c) comparaison du régime réel du moteur n avec un régime théorique du moteur associé à la valeur de la pédale de l'accélérateur FP_{E}, et
d) génération d'un signal de réglage (8) par l'appareil de commande du moteur (5) à l'attention du dispositif de réglage pour l'asservissement du régime réel du moteur n dans la plage du régime théorique du moteur, jusqu'à ce que la fin du processus de démarrage soit saisie par le dispositif (4).

2. Procédé selon la revendication 1, **caractérisé en ce qu'**une valeur seuil supérieure et une inférieure sont affectées au signal de réglage (8), où les valeurs seuil peuvent dépendre de la valeur de la pédale de l'accélérateur et/ou du régime du moteur.

3. Procédé selon l'une quelconque des revendications précédentes, **caractérisé en ce qu'**avec un dépassement par le haut et/ou le bas du régime théorique du moteur, l'asservissement du régime réel du moteur ne s'effectue qu'à l'intérieur d'une plage pouvant être prédéfinie de la valeur de la pédale de l'accélérateur.

4. Procédé selon l'une quelconque des revendications précédentes, **caractérisé en ce que** le signal de réglage (8) se produit selon une réponse indicielle pouvant être prédéfinie lors de la saisie du début et/ou de la fin d'un processus de démarrage.

5. Procédé selon l'une quelconque des revendications précédentes, **caractérisé en ce que** pour la saisie de la fin d'un processus de démarrage, le dispositif (4) calcule un régime du moteur n2 pour la vitesse enclenchée, lequel devrait se mettre en place avec l'embrayage fermé, **en ce qu'**il le compare avec le régime réel du moteur et conclut à la fin du processus de démarrage si le régime réel du moteur se situe à l'intérieur d'un intervalle prédéfini autour du régime du moteur n2 pendant une durée pouvant être prédéfinie.

6. Procédé selon l'une quelconque des revendications 1 à 4, **caractérisé en ce que** pour la saisie de la fin du processus de démarrage, le dispositif (4) calcule respectivement un régime du moteur n2 pour les vitesses pouvant entrer en considération en tant que vitesses de démarrage, lequel régime se mettrait respectivement en place avec l'embrayage fermé, **en ce qu'**il le compare au régime réel du moteur n et **en ce qu'**il conclut à la fin du processus de démarrage si le régime réel du moteur n se situe, pendant une durée pouvant être prédéfinie, à l'intérieur d'un intervalle autour du régime du moteur n2 pour exactement une de ces vitesses.

7. Procédé selon l'une quelconque des revendications précédentes, **caractérisé en ce qu'**après la saisie du début d'un processus de démarrage et/ou après le dépassement par le haut d'une vitesse limite V_{g}, une durée prédéfinie s'est écoulée.

8. Dispositif pour l'amélioration du démarrage d'un véhicule automobile avec boîte de vitesse manuelle, comprenant une pédale d'accélérateur, un dispositif (4) pour la saisie du début et de la fin d'un processus de démarrage d'un véhicule automobile et un appareil de commande (5) avec un régulateur associé,
à l'aide duquel il est possible d'amorcer au moins un dispositif de réglage influencant le régime du moteur n,
**caractérisé en ce que**
la pédale de l'accélérateur est développée en tant que pédale d'accélérateur (2) électronique mécaniquement découplée avec un appareil de commande (3) associé, où il est possible de faire parvenir à l'appareil de commande (3) la valeur de la pédale de l'accélérateur FP_{E}, un régime réel du moteur n et un signal de commande du dispositif (4), et **en ce qu'**un signal de réglage (8) pour le dispositif de réglage est généré par l'appareil de commande (3) moyennant une ligne caractéristique ou un champ caractéristique de valeur de pédale d'accélérateur-régime théorique du moteur via le régulateur, jusqu'à ce que la fin du processus de démarrage soit saisie par le dispositif (4).

9. Dispositif selon la revendication 8, **caractérisé en ce que** l'appareil de commande (3) de la pédale de l'accélérateur (2) électronique est intégré dans un appareil de commande du moteur (5).

10. Dispositif selon l'une quelconque des revendications 8 ou 9, **caractérisé en ce que** le régulateur est développé en tant que régulateur P, PD ou PID.

11. Dispositif selon la revendication 9, **caractérisé en ce que** le dispositif (4) pour la saisie du début et de la fin d'un processus de démarrage est intégré dans l'appareil de commande du moteur (5) par enchaînement logiciel de signaux existants.

12. Dispositif selon l'une quelconque des revendications 8 à 11, **caractérisé en ce que** les lignes caractéristiques ou les champs caractéristiques pour la valeur seuil supérieure et inférieure débutent et se terminent en un point commun.
